# EUROPEAN PATENT APPLICATION

(11) **EP 0 582 449 A2**
(43) Date of publication of application: **09.02.1994**
(21) Application number: 93306093.1
(22) Date of filing: 02.08.1993
(51) Int. Cl.: F16B 37/08, F16B 5/02

(54) **Fastener**

(30) Priority: 06.08.1992 FR 9209791
(71) Applicant: EMHART INC., Newark, Delaware 19711 (US)
(72) Inventor: Irgang, Günter, F-77980 Crecy-la-Chapelle (FR); Combaluzier, Christopher, F-91000 Evri (FR)
(74) Representative: Randall, John Walter

(57) **Abstract**

A two part fastener for use with a thin workpiece comprising a panel portion (2), latch members (12) for securing the portion in an aperture in a workpiece with a base seated against the panel (2), a barrel (20) having a through bore (22) and a general conical outer surface, the barrel also comprising two clamping members (24) capable of flexing about an outer end portion of the barrel and being of an outer diameter slightly greater than that of the barrel and a clamp portion comprising a body having a cylindrical bore and a tapered bore, whereby the panel portion can be latched into an aperture in a workpiece by a screw member pushed through the bore of the barrel and the cylindrical bore of the clamp portion and screwed onto the screw member, the tapered bore engaging the clamping members so that, as the clamp portion is screwed onto the screw member, the clamping members are forced into clamping engagement with the screw member.

## Description

The present invention is concerned with two part fasteners for use in securing a screw member to a thin workpiece, e.g. a panel.

In the attachment of parts, for example rear lights in the manufacture of cars it is desirable to be able to secure the part to a panel so that it is securely held without being dependent on the observation of close manufacturing tolerances in the aperture in the panel to which the part is to be attached.

The present invention provides a two part fastener for use in securing a screw member to a thin workpiece comprising
a panel portion and
a clamp portion
the panel portion comprising latch members
for securing the portion in a suitable aperture in a workpiece with a base seated against the panel
a barrel having a through bore and a general conical outer surface, the barrel also comprising two clamping members capable of flexing about an outer end portion of the barrel and being of an outer diameter slightly greater than that of the barrel
the clamp portion comprising a body having a cylindrical bore and a tapered bore
whereby the panel portion can be latched into an aperture in a work piece
a screw member can be pushed through the bore of the barrel
and the cylindrical bore of the clamp portion can be screwed onto the screw member, the tapered bore engaging the clamping members and, as the clamp portion is screwed onto the screw member, the clamping members being forced into clamping engagement with the screw member.

There now follows a description, to be read with reference to the accompanying drawings, of a two part fastener embodying the invention, which has been selected for description to illustrate the invention by way of example.

In the drawings:-
Figure 1 shows a side view of a panel portion of the fastener secured in a panel;
Figure 2 shows a view in section corresponding to Figure 1;
Figure 3 shows a plan view of Figure 1;
Figure 4 shows a view in section taken along the line IV-IV of Figure 3, with a screw member in position;
Figure 5 shows a view corresponding to Figure 4 with a clamp portion of the fastener in position.

The fastener is a two piece fastener suitable for use in securing articles (e.g. rear lights) to a work piece (e.g. a body panel). The fastener comprises a panel portion 2 and a clamp portion 4.

The panel portion 2 comprises a base 6 having a flat upper surface 8 and an inclined reinforcing skirt 10. Extending upwardly from the base 6 are two parallel latch members 12, bounded by recesses 14, 16, in the base allowing for flexing of the latch members. Each latch member has a latch portion 18, the two latch portions being parallel and at opposite sides of the panel portion 2. Extending upwardly from the base 6 is a generally conical barrel 20 having a generally cylindrical through bore 22. Two clamping members 24 are provided diametrically opposed to each other in the barrel 20. These members are defined by shaped slots 26 and are thus capable of flexing movement about an upper end portion 28 of the barrel. The external diameter of the clamping members 24 is slightly greater than that of the remainder of the barrel.

The clamp portion 4 of the fastener comprises a body 27 connected to a skirt 29 having an annular flat surface 30. The skirt is reinforced by ribs 32 between it and the body 26 and surrounds a recess 34.

The body 26 comprises a cylindrical bore 36 which leads to a tapered bore 38. The body 26 may be provided with external flats (not shown) enabling it to be gripped for rotation.

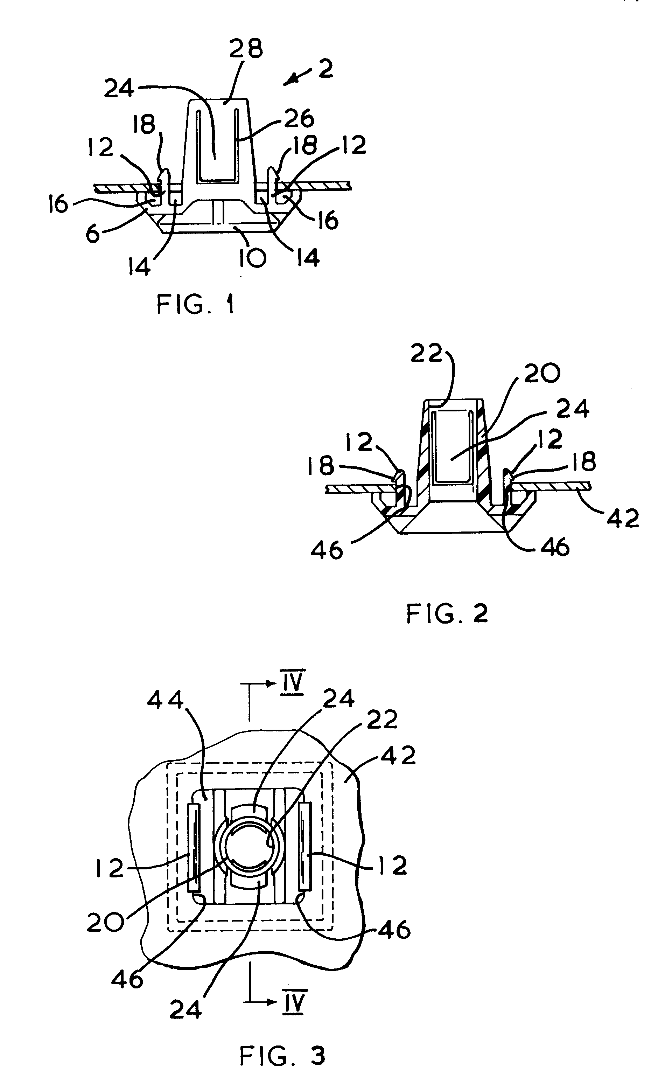

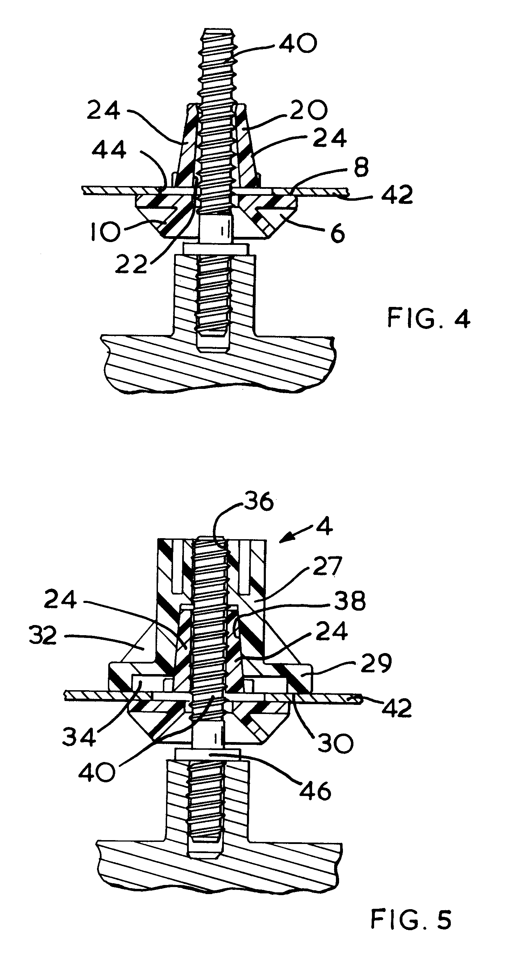

The fastener is designed to secure an article having a projecting screw member 40 to a panel 42. The panel 42 is provided with an aperture 44 which is generally square, and the panel portion 2 is pushed into this apperture so that the latch member 12 engage over opposed edges 46,46 of the aperture and the surface 8 seats against the panel, thus to hold the panel portion 2 firmly in place. The screw member 40 (see Figure 4) is then pushed into the bore 22 until it protrudes beyond the panel portion 2, the clamping member 24 gripping the screw member 40 to hold it in place. The clamp portion 4 is then placed over the protruding part of the screw member 40 so that it engages in the bore 36, and is screwed downwards onto the member 40 until the annular flat surface 30 seats against the panel 42. This screwing action forces the tapered bore 38 into engagement with the clamping members 24 of the panel portion 2, causing them to proof inwardly and thus firmly to clamp the thread of the screw members 40, which is thus firmly held in the panel against longitudinal or tilting movement.

In the embodiment shown, the screw member 40 is part of a double ended screw fixing 46 which can be utilized to secure an article, for example a rear lamp, to the panel.

## Claims

1. A two part fastener for use in securing a screw member to a thin workpiece comprising
a panel portion (2) and
a clamp portion (4)
the panel portion (2) comprising latch members (12) for securing the portion (2) in a suitable aperture in a workpiece with a base (6) seated against the panel
a barrel (20) having a through bore (22) and a general conical outer surface, the barrel (20) also comprising two clamping members (24,24) capable of flexing about an outer end portion of the barrel (20) and being of an outer diameter slightly greater than that of the barrel
the clamp portion (4) comprising a body (27) having a cylindrical bore (36) and a tapered bore (38)
whereby the panel portion (2) can be latched into an aperture in a workpiece
a screw member (40) can be pushed through the bore (22) of the barrel (20)
and the cylindrical bore (36) of the clamp portion (4) can be screwed onto the screw member (40), the tapered bore (38) engaging the clamping members (24,24) and, as the clamp portion is screwed onto the screw member, the clamping members (24,24) being forced into clamping engagement with the screw member.

2. A two part fastener according to claim 1 wherein the latch members comprise two parallel latch portions (18) extending at opposite sides of the panel portion (2)

3. A two part fastener according to one of claims 1 and 2 wherein the base (6) comprises a flat upper surface (8).

4. A two part fastener according to any one of the preceding claims wherein the clamp portion (4) comprises a skirt (29) surrounding a recess (34) and having a flat annular surface (30), the surface (30) being forced into engagement with the workpiece when the clamp portion (4) is screwed onto the screw member.
